# EUROPEAN PATENT APPLICATION

(11) **EP 4 657 546 A1**
(43) Date of publication of application: **03.12.2025**
(21) Application number: 25170665.1
(22) Date of filing: 15.04.2025
(51) Int. Cl.: H01M 4/133, C07C 69/76, C07C 69/88, H01M 4/134, H01M 4/62, H01M 10/052, H01M 10/0569

(54) **NEGATIVE ELECTRODE FOR LITHIUM ION SECONDARY BATTERY AND LITHIUM ION SECONDARY BATTERY**

(30) Priority: 31.05.2024 JP 2024088974
(71) Applicant: Prime Planet Energy & Solutions, Inc., Chuo-ku, Tokyo 103-0022 (JP)
(72) Inventor: YANO, Yuta, Tokyo 103-0022 (JP)
(74) Representative: Kuhnen & Wacker Patent- und Rechtsanwaltsbüro PartG mbB

(57) **Abstract**

A negative electrode active material layer of a herein disclosed negative electrode contains a chemical compound represented General formula (1) described below. Incidentally, each of R1 to R5 in the formula is independently selected from a group consisting of a hydrogen, an alkyl group, a hydroxy group, a cyano group, an aldehyde group, an ether group, an ester group, an amino group, and a phenyl group, R6 is the alkyl group, and at least 1 of the R1 to the R5 is the hydroxy group. According to the negative electrode containing the chemical compound having the above described configuration, it is possible to suitably inhibit an occurrence of an inside short circuit and a reduction of a battery capacity which are caused by a precipitation of a metal Li.

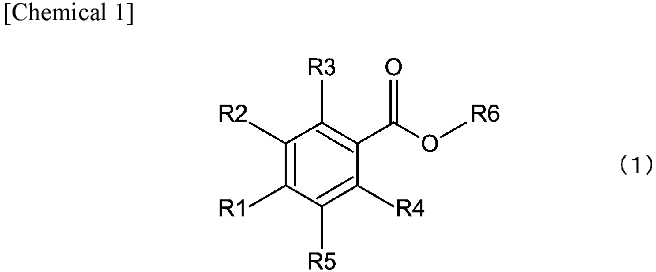

## Description

### BACKGROUND

### 1. Technical Field

A herein disclosed technique relates to a lithium ion secondary battery. In particular, it relates to a negative electrode which is used for the lithium ion secondary battery, and relates to the lithium ion secondary battery in which the negative electrode is used.

### 2. Description of the Related Art

Recently, the lithium ion secondary battery is widely used in various equipments, such as electric vehicle and portable terminal. This lithium ion secondary battery includes an electrode assembly in which a positive electrode and a negative electrode are opposed via a separator. Then, an electrolytic solution osmoses to an inside (an electrode gap between the positive electrode and the negative electrode) of this electrode assembly. In an electric charge of the lithium ion secondary battery having the configuration described above, a Li ion being a charge carrier moves from the positive electrode to the negative electrode. If an overcharge is caused at that time, there is a fear that a dendritic metal Li precipitates at the negative electrode side. This dendritic metal Li might cause an inside short circuit due o a breakage of the separator. In addition, if the precipitation of the metal Li proceeds, the Li ion used in an electric charge and electric discharge response is reduced and thus it might cause a reduction of a battery capacity. Against these problems, various techniques for suppressing the precipitation of the metal Li in the lithium ion secondary battery are proposed. An example of the techniques for suppressing the precipitation of this metal Li is disclosed in JP2022-87412, JP2019-192607, JP2007-123171, or the like.

### SUMMARY

Anyway, since a demand for a battery performance is recently increased, it is required to provide a technique that can further suitably solve a problem caused by the precipitation of the metal Li. The herein disclosed technique is implemented according to the demand described above, and an object is to provide a technique that can suitably inhibit the inside short circuit and the capacity reduction which are caused by the precipitation of the metal Li.

A herein disclosed negative electrode for a lithium ion secondary battery (below, simply referred to as "negative electrode", too) includes a negative electrode substrate and a negative electrode active material layer attached on a surface of the negative electrode substrate. Then, the negative electrode active material layer of this negative electrode contains a chemical compound represented by General formula (1) described below. Incidentally, each of R1 to R5 in General formula (1) described below is independently selected from a group consisting of a hydrogen, an alkyl group, a hydroxy group, a cyano group, an aldehyde group, an ether group, an ester group, an amino group, and a phenyl group. In addition, R6 in the formula is an alkyl group. Then, the herein disclosed negative electrode is characterized in that at least 1 of the R1 to the R5 is the hydroxy group.

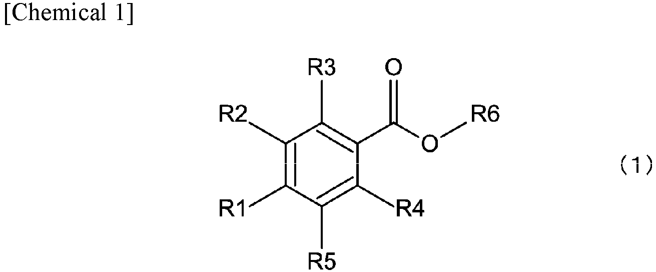

The chemical compound represented by General formula (1) described above is to function as a Li collecting member that is configured to collect the metal Li having precipitated on the negative electrode. In particular, this Li collecting member is characterized in that at least 1 of the R1 to the R5 of the formula is the hydroxy group. This hydroxy group can collect the Li after the precipitation. By doing this, it is possible to inhibit the inside short circuit caused by a growth of the metal Li. Further, the Li collecting member having the above described configuration includes the hydroxy group being a hydrophilic group, and thus is hardly dissolved into a nonaqueous electrolytic solution of the lithium ion secondary battery. However, when the hydrogen (H) of the hydroxy group is replaced with the lithium (Li) by the collection of the Li, the Li collecting member becomes a chemical compound being soluble to the nonaqueous electrolytic solution. By doing this, it is possible to return the Li, which has once precipitated, into the nonaqueous electrolytic solution. As this result, it is possible to inhibit the capacity reduction caused by the precipitation of the metal Li. Further, the Li collecting member after the release of the Li becomes the chemical compound including the hydroxy group, again. As this result, the Li collecting member having become insoluble to the nonaqueous electrolytic solution precipitates from the nonaqueous electrolytic solution. By doing this, the Li collecting member can collect the metal Li, again. As described above, according to the herein disclosed negative electrode, it is possible to suitably inhibit the inside short circuit and the capacity reduction caused by the precipitation of the metal Li.

### BRIEF DESCRIPTION OF THE DRAWINGS

FIG. 1 is a cross section view that is to schematically explain a negative electrode for a lithium ion secondary battery in accordance with one embodiment.
FIG. 2 is a view that is for explaining a collection of Li on the negative electrode shown by FIG. 1.
FIG. 3 is a view that is for explaining a precipitation of a Li collecting member on the negative electrode shown by FIG. 1.
FIG. 4 is a cross section view that schematically shows the lithium ion secondary battery in accordance with one embodiment.
FIG. 5 is a perspective view that shows an electrode assembly of the lithium ion secondary battery in accordance with one embodiment.

### DETAILED DESCRIPTION

Below, an embodiment of a herein disclosed technique is described in detail by reference to the accompanying drawings. Incidentally, the matters being other than matters particularly mentioned in this specification and being required for executing the herein disclosed technique (for example, a detailed manufacturing method of a negative electrode, or the like) can be grasped as design matters of those skilled in the art based on the related art in the present field. The herein disclosed technique can be executed based on the contents disclosed in the present specification, and the technical common sense in the present field. Additionally, in the drawings described below, the members/parts providing the same effect are provided with the same numerals and signs.

Incidentally, the wording "lithium ion secondary battery" in the present specification means a secondary battery that can move a Li ion being a charge carrier between a positive electrode and a negative electrode so as to perform an electric charge and an electric discharge. In general, the secondary battery, which is referred to as a lithium secondary battery (or a lithium ion battery) or the like, is a typical example semantically covered by the lithium ion secondary battery of the present specification. In addition, a wording "active material" of the present specification means a substance (a chemical compound) relating to a storage and release of the Li ion at a positive electrode side and a negative electrode side.

### 1. Negative electrode for lithium ion secondary battery

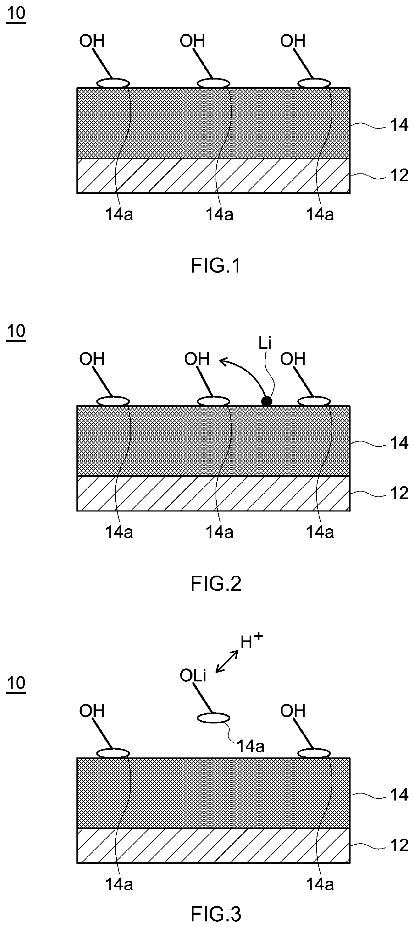

At first, one embodiment of the negative electrode disclosed herein will be described. FIG. 1 is a cross section view that is to schematically explain the negative electrode for the lithium ion secondary battery in accordance with the present embodiment. FIG. 2 is a view that is for explaining a collection of the Li on the negative electrode shown by FIG. 1. FIG. 3 is a view that is for explaining a precipitation of a Li collecting member on the negative electrode shown by FIG. 1.

As shown in FIG. 1, the negative electrode 10 in accordance with the present embodiment includes a negative electrode substrate 12 and a negative electrode active material layer 14. Below, each configuration will be described.

### (1) Negative electrode substrate

The negative electrode substrate 12 is a conductive member that is formed in a foil shape. For the negative electrode substrate 12, it is possible without particular restriction to use a conventionally known conductive member that can be used as the negative electrode substrate for the lithium ion secondary battery. In other words, the negative electrode disclosed herein is not to be restricted by a configuration of the negative electrode substrate. Incidentally, as an example of the negative electrode substrate 12, it is possible to use a copper foil whose thickness is 5 µm to 30 µm.

### (2) Negative electrode active material layer

The negative electrode active material layer 14 is attached on a surface of the negative electrode substrate 12. This negative electrode active material layer 14 contains a negative electrode active material and various additives (a binder, and the like). Further, the negative electrode active material layer 14 in the present embodiment contains a Li collecting member 14a. Below, a component of the negative electrode active material layer 14 will be described.

### (a) Negative electrode active material

The negative electrode active material is a granular material that can store and release the lithium ion. A material of the negative electrode active material is not particularly restricted, and a conventionally known material for the negative electrode active material can be used without particular restriction. As a suitable example of the material for the negative electrode active material, it is possible to use a carbon material, such as graphite, hardly graphitized carbon (hard carbon), easily graphitized carbon (soft carbon), and carbon nanotube. In addition, as another suitable example of the material for the negative electrode active material, it is possible to use a Si-based material, such as silicon (Si) and silicon chemical compound. Incidentally, a content amount of the negative electrode active material with respect to a total mass (100 wt%) of the negative electrode active material layer 14 is preferably 90 wt% to 99.5 wt% (further suitably, 95 wt% to 99 wt%).

### (b) Additive

In addition, as an additive other than the negative electrode active material, it is possible to contain a binder, a thickening agent, or the like. As the binder, it is possible to use polyvinylidene fluoride (PVdF), polyvinylidene chloride (PVdC), styrene butadiene rubber (SBR), polytetrafluoroethylene (PTFE), polyethylene (PE), polyacrylic acid (PAA), or the like. In addition, as the thickening agent, it is possible to use carboxymethyl cellulose (CMC), methylcellulose (MC), or the like. Incidentally, a total content amount of the additive with respect to the total mass of the negative electrode active material layer 14 is preferably 0.5 wt% to 10 wt% (further suitably, 1 wt% to 5 wt%).

### (c) Li collecting member

Then, the negative electrode active material layer 14 in the present embodiment contains a chemical compound (the Li collecting member 14a) represented by General formula (1) described below.

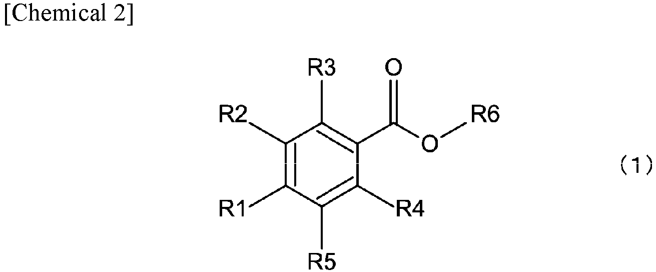

Here, each of R1 to R5 in General formula (1) described above is independently selected from a group consisting of a hydrogen, an alkyl group, a hydroxy group, a cyano group, an aldehyde group, an ether group, an ester group, an amino group, and a phenyl group. Here, the Li collecting member 14a in the present embodiment is characterized in that at least one of R1 to R5 is the hydroxy group. The negative electrode 10 containing the Li collecting member 14a having the configuration described above can suitably inhibit the precipitation of the metal Li at an electrically charging time of the lithium ion secondary battery. Below, it will be explained particularly.

At first, as described below, the negative electrode 10 of the normal lithium ion secondary battery is used in a state of being immersed into a nonaqueous electrolytic solution. At that time, the Li collecting member 14a includes the hydroxy group (-OH) being a hydrophilic group, and thus it is hardly dissolved into the nonaqueous electrolytic solution containing an organic solvent. Thus, the Li collecting member 14a for a normal charge and discharge response is present on the negative electrode active material layer 14 (see FIG. 1). Here, as shown in FIG. 2, when the metal Li precipitates on the negative electrode 10, the Li collecting member 14a collects the metal Li at the hydroxy group (-OH). By doing this, it is possible to inhibit the inside short circuit caused by the growth of the metal Li.

Next, the Li collecting member 14a having collected the Li becomes an aromatic chemical compound in which the hydroxy group is not included, because the hydrogen (H) being the hydroxy group is replaced with the lithium (Li). By doing this, the Li collecting member 14a is dissolved into the nonaqueous electrolytic solution as shown in FIG. 3. Then, when the Li collecting member 14a is dissolved into the nonaqueous electrolytic solution, a hydrogen ion (H+) of the nonaqueous electrolytic solution is replaced with the collected lithium (Li). By doing this, it is possible to return the Li, which has once precipitated, into the nonaqueous electrolytic solution and thus it is possible to inhibit the capacity reduction caused by the precipitation of the metal Li. On the other hand, the Li collecting member 14a again becomes the aromatic chemical compound including the hydroxy group, because of combination with the hydrogen ion (H+). By doing this, the Li collecting member having become insoluble to the nonaqueous electrolytic solution again precipitates from the nonaqueous electrolytic solution. Then, as shown in FIG. 1, the Li collecting member 14a after the precipitation again adheres on the negative electrode 10. By doing this, the Li collecting member 14a becomes in a state where it can collect the metal Li. As described above, the Li collecting member 14a represented by the above described General formula (1) has 2 functions, one of which is to collect the metal Li having precipitated and the other one of which is to reuse the metal Li having been collected. By doing this, it is possible to suitably inhibit both of the inside short circuit and the capacity reduction, which are caused by the precipitation of the metal Li.

Incidentally, it is good that the hydroxy group (-OH) of the Li collecting member 14a is present at any one of the R1 to the R5 in Formula (1) described above. By doing this, it is possible to sufficiently inhibit the generation of the inside short circuit and the reduction of the battery capacity, which are caused by the precipitation of the metal Li. However, in consideration of a responsibility with the metal Li, a position of the hydroxy group (-OH) is preferably any of R1, R2, and R5 of General formula (1), or is preferably in particular R1. In particular, the Li collecting member 14a represented by General formula (1) includes a bulky branched-chain containing R6. There is a tendency that the hydroxy group at a vicinity of this branched-chain (in short, the R3 and the R4) becomes hardly responsive to the Li but the hydroxy group at a position away from this branched-chain (in short, the R1, the R2, and the R5) becomes easily responsive to the Li.

In addition, a number of the hydroxy groups of the Li collecting member 14a, which is not particularly restricted, can be appropriately selected in a range from 1 to 5. However, if the number of the hydroxy groups is increased too much, the hydroxy group tends to often remain even after the collection of the metal Li and thus it becomes hard to induce the reuse of the Li due to the dissolve into the nonaqueous electrolytic solution. From the perspective described above, the number of the hydroxy groups of the Li collecting member 14a is preferably equal to or less than 4, preferably equal to or less than 3, or preferably equal to or less than 2. On the other hand, a lower limit value of the number of the hydroxy groups is not particularly restricted and might be equal to or more than 1.

In addition, the R6 of General formula (1) described above is the alkyl group. The alkyl group at this R6 affects the solubility into the nonaqueous electrolytic solution. For example, there is a tendency in which the solubility into the nonaqueous electrolytic solution at the Li collection time is enhanced more, as a carbon number of the alkyl group at the R6 is increased more. From a perspective as described above, the carbon number of the alkyl group at the R6 is preferably equal to or more than 1, or preferably in particular equal to or more than 2. On the other hand, there is a tendency in which the solubility under a state where the Li is not collected is reduced more, as the carbon number of the alkyl group at the R6 is reduced more. From a perspective as described above, the carbon number of the alkyl group at the R6 is preferably equal to or less than 5, or preferably in particular equal to or less than 4. Incidentally, in the Li collecting member 14a represented by General formula (1) described above, the carboxylic acid group is esterified. By doing this, it is possible to suppress the response of the alkyl group at the R6 with the Li.

Incidentally, as a specific example of the Li collecting member 14a, it is possible to use ethyl hydroxybenzoate, hydroxybenzonate methyl, propyl hydroxybenzoate, or the like. The aromatic chemical compounds including these hydroxy groups can properly exhibit 2 functions, one of which is to collect the metal Li and the other one of which is to reuse the metal Li after the collection.

In addition, regarding a general lithium ion secondary battery, the metal Li tends to precipitate on the surface of the negative electrode active material layer 14. Thus, it is preferable that the Li collecting member 14a is attached on the surface of the negative electrode active material layer 14. By doing this, a precipitation area of the metal Li and an arrangement position of the Li collecting member 14a become closer to each other, and thus it is possible to enhance a collection efficiency for the Li. Incidentally, the negative electrode 10 having the configuration described above can be manufactured by applying a slurry containing the Li collecting member 14a to coat the surface of the negative electrode active material layer 14 and then drying the resultant.

In addition, it is preferable that an addition amount of the Li collecting member 14a is defined on the basis of a relationship with an unit area of the surface of the negative electrode active material layer 14. By doing this, it is possible to make a sufficient amount of the Li collecting member 14a be present with respect to a size of the precipitation area of the metal Li, and thus it is possible to further enhance the collection efficiency for the Li. In particular, it is confirmed with an experiment that the collection efficiency for the Li is drastically enhanced when the addition amount of the Li collecting member 14a exceeds 0.02 mg/cm² or more. From a perspective as described above, the addition amount of the Li collecting member 14a per unit area size of the surface of the negative electrode active material layer 14 is preferably equal to or more than 0.02 mg/cm², further preferably equal to or more than 0.03 mg/cm², further more preferably equal to or more than 0.04 mg/cm², or preferably in particular equal to or more than 0.05 mg/cm². On the other hand, if the addition amount of the Li collecting member 14a exceeds a predetermined amount, a Li collection effect is saturated. Therefore, an upper limit value of the addition amount of the Li collecting member 14a is preferably equal to or less than 0.5 mg/cm², further preferably equal to or less than 0.4 mg/cm², furthermore preferably equal to or less than 0.3 mg/cm², or preferably in particular equal to or less than 0.25 mg/cm².

### 2. Lithium ion secondary battery

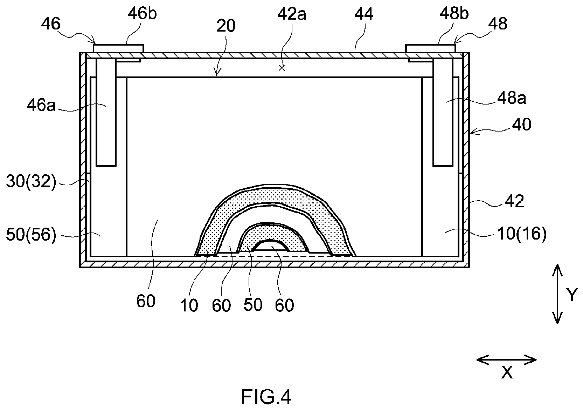

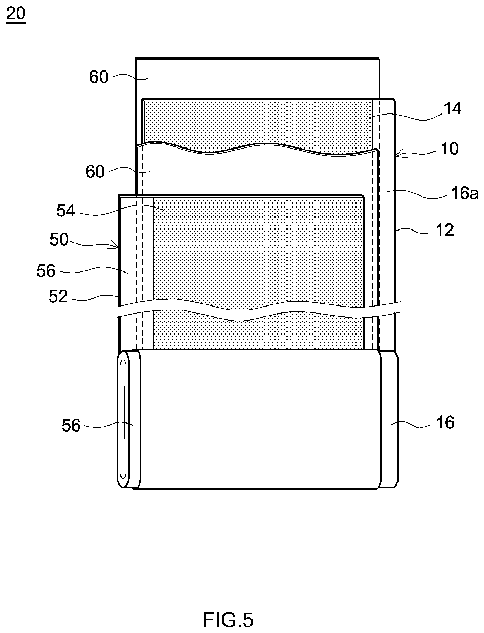

Next, the lithium ion secondary battery 1 including the negative electrode 10 configured as described above (below, simply referred to as "secondary battery 1", too) will be described. FIG. 4 is a cross section view that schematically shows the lithium ion secondary battery in accordance with the present embodiment. FIG. 5 is a perspective view that shows an electrode assembly of the lithium ion secondary battery in accordance with the present embodiment. In addition, a reference sign X of FIG. 4 represents a width direction (of the secondary battery 1), and a reference sign Y represents a height direction (of the secondary battery 1). Incidentally, these directions are defined for convenience sake of explanation, and are not intended to restrict a disposed aspect of the lithium ion secondary battery disclosed herein.

As shown in FIG. 4, the secondary battery 1 in accordance with the present embodiment includes the electrode assembly 20 and the nonaqueous electrolytic solution 30. The electrode assembly 20 and the nonaqueous electrolytic solution 30, described above, are accommodated in a case 40. Below, a particular configuration of the secondary battery 1 will be described.

### (1) Case

As described above, the case 40 is a container configured to accommodate the electrode assembly 20 and the nonaqueous electrolytic solution 30. The case 40 shown by FIG. 1 includes a case main body 42 that is a box-shaped container including an opening part 42a and includes a sealing plate 44 that is configured to cover the opening part 42a. In addition, the sealing plate 44 is provided with a positive electrode terminal 46 and a negative electrode terminal 48. A lower end part 46a of the positive electrode terminal 46 is electrically connected to a positive electrode 50 inside the case 40. In addition, an upper end part 46b of the positive electrode terminal 46 is exposed to an outside of the case 40. On the other hand, a lower end part 48a of the negative electrode terminal 48 is electrically connected to the negative electrode 10 inside the case 40. In addition, an upper end part 48b of the negative electrode terminal 48 is exposed to the outside of the case 40.

### (2) Electrode assembly

As shown in FIG. 5, the electrode assembly 20 includes the positive electrode 50 and the negative electrode 10. Then, the positive electrode 50 and the negative electrode 10 are opposed to each other through the separator 60. Incidentally, the electrode assembly 20 in the present embodiment is a wound electrode assembly. In particular, the electrode assembly 20 is manufactured by winding a laminate body in which the positive electrode 50 and the negative electrode 10 are laminated while being arranged to sandwich the separator 60.

### (a) Positive electrode

The positive electrode 50 includes a positive electrode substrate 52 which is formed in a long foil shape, and includes a positive electrode active material layer 54 which is attached on the surface of the positive electrode substrate 52. This positive electrode active material layer 54 includes a positive electrode active material and the other additive (a binder, or the like). Incidentally, at one of side edge parts of the positive electrode 50 in the width direction, the positive electrode active material layer 54 is not applied to coat it and a positive electrode substrate exposed part 56 is formed on which the positive electrode substrate 52 is exposed. This positive electrode substrate exposed part 56 is, as shown in FIG. 4, electrically connected to the lower end part 46a of the positive electrode terminal 46.

The positive electrode active material of the positive electrode active material layer 54 is a granular material that can store and release the lithium ion. A material of the positive electrode active material is not particularly restricted, and thus it is possible to use a conventionally known material without particular restriction. As an example of the material of this positive electrode active material, it is possible to use a lithium-transition metal complex oxide. This lithium-transition metal complex oxide contains the lithium element, and contains one or two kinds of transition metal elements. As a specific example of the lithium-transition metal complex oxide, it is possible to use a lithium nickel base composite oxide (for example, LiNiO₂), a lithium cobalt base composite oxide (for example, LiCoO₂), a lithium manganese base composite oxide (for example, LiMn₂O₄), a lithium nickel manganese base composite oxide (for example, LiNi_{0.5}Mn_{1.5}O₄), a lithium-nickel-cobalt-manganese base composite oxide (for example, LiNi_{1/3}Co_{1/3}Mn_{1/3}O₂), or the like. In addition, as the lithium-transition metal complex oxide, it is possible to use a polyanion base (for example, olivine base) chemical compound (for example, LiFePO₄, LiMnPO₄) whose formula is represented by LiMPO₄ (a transition metal element in which M of the formula is at least one kind or more of Co, Ni, Mn, and Fe). Incidentally, the wording "lithium-nickel-cobalt-manganese base composite oxide" in the present specification semantically covers not only an oxide whose configuration metal elements are only Li, Ni, Co, and Mn but also an oxide, or the like, which contains one kind or more of metal elements other than the Li, the Ni, the Co, and the Mn. As the above described metal element other than the Li, the Ni, the Co, and the Mn, it is possible to use a transition metal element other than the Ni, the Co, and the Mn and/or a typical metal element (for example, Al, Ca, Cr, Fe, V, Mg, Ti, Zr, Nb, Mo, W, Cu, Zn, Ga, In, Sn, La, and Ce), or the like. In addition, although a detailed explanation is omitted, the wording "lithium nickel base composite oxide", the wording "lithium cobalt base composite oxide", the wording "lithium manganese base composite oxide", and the wording "polyanion base chemical compound" also semantically cover the oxide which contains one kind or more of the other metal elements, or the like.

In addition, as the other additives to be contained in the positive electrode active material layer 54, it is possible to use an electrically conductive auxiliary material, a binder, or the like. These additives are not particularly restricted either, and a conventionally known additive can be used as for them without particular restriction. As the electrically conductive auxiliary material, it is possible to use a carbon base material, such as carbon powder and carbon fiber, or the like. In addition, as the binder for the positive electrode active material layer 54, it is possible to use a vinyl halide resin, such as polyvinylidene fluoride (PVdF), a polyalkylene oxide, such as polyethylene oxide (PEO), or the like.

### (b) Negative electrode

On the other hand, regarding the secondary battery 1 in accordance with the present embodiment, the negative electrode 10 having the configuration described above is used. As described above, this negative electrode 10 contains the Li collecting member 14a at the negative electrode active material layer 14. Incidentally, due to duplicate explanations, a detailed explanation for the negative electrode 10 is omitted. In addition, as shown in FIG. 5, at one of side edge parts of the negative electrode 10 in the width direction, the negative electrode active material layer 14 is not attached and a negative electrode substrate exposed part 16 is formed on which the negative electrode substrate 12 is exposed. As shown in FIG. 4, this negative electrode substrate exposed part 16 is electrically connected to the lower end part 48a of the negative electrode terminal 48.

### (c) Separator

The separator 60 is an insulation sheet that is arranged between the positive electrode 50 and the negative electrode 10. As an example of a material of the separator 60, it is possible to use a polyolefin base resin, or the like. In addition, plural small cavities being microscopic are formed on the separator 60. By doing this, it is possible to move the Li ion between the positive electrode 50 and the negative electrode 10.

### (3) Nonaqueous electrolytic solution

The nonaqueous electrolytic solution 30 osmoses to an inside of the electrode assembly 20. In other words, the nonaqueous electrolytic solution 30 is present at an electrode gap between the positive electrode 50 and the negative electrode 10. At the electric charge and the electric discharge of this secondary battery 1, the Li ion moves between the positive electrode 50 and the negative electrode 10 through the nonaqueous electrolytic solution 30. In addition, regarding the secondary battery shown by FIG. 4, a part of the nonaqueous electrolytic solution 30 is present as an excess electrolytic solution 32 at an outside of the electrode assembly 20 (typically, between the battery case 40 and the electrode assembly 20). By doing this, it is possible to refill the inside of the electrode assembly 20 with the nonaqueous electrolytic solution 30, when the nonaqueous electrolytic solution 30 inside the electrode assembly 20 is reduced.

Incidentally, a kind of the nonaqueous electrolytic solution 30 is not particularly restricted, and thus a conventionally known nonaqueous electrolytic solution can be used without particular restriction. In particular, the nonaqueous electrolytic solution 30 is prepared by making the nonaqueous solvent contain a supporting salt. As a specific example of the nonaqueous solvent, it is possible to use carbonates, ethers, esters, nitriles, sulfones, lactones, or the like. Among them, in particular, the carbonates can easily dissolve the Li collecting member 14a at the Li collection time, and the carbonates are particularly preferable as a solvent of the nonaqueous electrolytic solution 30 in the present embodiment. Incidentally, any of chain-shaped carbonates and ring-shaped carbonates can be used as the carbonates. As the chain-shaped carbonates, it is possible to use dimethyl carbonate (DMC), diethyl carbonate (DEC), ethyl methyl carbonate (EMC), monofluoromethyl difluoromethyl carbonate (F-DMC), trifluoro dimethyl carbonate (TFDMC), or the like. On the other hand, as the ring-shaped carbonates, it is possible to use ethylene carbonate (EC), propylene carbonate (PC), monofluoroethylene carbonate (MFEC), difluoroethylene carbonate (DFEC), or the like. In addition, regarding them, it is possible to use single kind, or a mixture in which two or more kinds are combined. In addition, as the supporting salt, it is possible to use LiPF6, LiBF4, lithium bis(fluorosulfonyl)imide (LiFSI), lithium bis(trifluoromethane)sulfonimide (LiTFSI), or the like. A concentration of the supporting salt in the nonaqueous electrolytic solution 30 is, for example, equal to or more than 0.5 mol/L and not more than 5 mol/L, or preferably equal to or more than 0.7 mol/L and not more than 2.5 mol/L.

As described above, the secondary battery 1 in accordance with the present embodiment includes the negative electrode 10 that contains the Li collecting member 14a. This Li collecting member 14a has 2 functions, one of which is to collect the metal Li having precipitated and the other one of which is to reuse the metal Li having been collected. By doing this, it is possible to suitably inhibit both of the inside short circuit and the capacity reduction which are caused by the precipitation of the metal Li.

### 3. Another embodiment

Above, one embodiment of the herein disclosed technique has been explained. Incidentally, the herein disclosed technique is not to be restricted by the above described embodiment, and semantically covers another embodiment in which various changes are added. For example, in the above described embodiment, the Li collecting member 14a is attached on the surface of the negative electrode active material layer 14 (see FIG. 1). However, the arrangement position of the Li collecting member is not to restrict the herein disclosed technique. For example, the Li collecting member might be added to an inside of the negative electrode active material layer. Even with the configuration described above, it is possible to suitably inhibit the precipitation of the metal Li. In particular, the metal Li precipitates not only on the surface but also at the inside of the negative electrode active material layer. Then, the Li collecting member being after the Li collection dissolves in the nonaqueous electrolytic solution and then precipitates again. Thus, even in a situation where the Li collecting member is added to the inside of the negative electrode active material layer at the manufacturing time, the Li collecting member moves more to the surface side of the negative electrode active material layer as the electric charge and the electric discharge are repeated more. By doing this, it is possible to arrange the sufficient amount of the Li collecting members on the surface of the negative electrode active material layer where the metal Li tends to precipitate easily.

### [Test example]

Below, a test example related to the herein disclosed technique will be explained. Incidentally, the explanation described below is not intended to restrict the herein disclosed technique.

### A. First test

In the present test, ethyl hydroxybenzoate was prepared as the Li collecting member represented by General formula (1) described above. Then, a solubility and a Li collection performance of this Li collecting member were examined. Specific contents of the experiment are as described below.

At first, 10 mL of the nonaqueous solvent (ethyl methyl carbonate) is accommodated in an eppendorf tube whose capacity was 25 mL. Next, 2000 mg of ethyl hydroxybenzoate was added, and then a shaking treatment with a stirrer (shaking time: 3 minutes, shaking speed: 700 rpm) was performed. At that time, a dissolution amount of the ethyl hydroxybenzoate was 0.05 mg/mL. Therefore, it was found that the ethyl hydroxybenzoate had a poor solubility to the nonaqueous electrolytic solution.

Next, 1 g of a Li metal piece was added to this eppendorf tube, and then the shaking treatment (shaking time: 3 minutes, shaking speed: 700 rpm) was performed. As this result, the Li metal piece disappeared. Therefore, it was found that the ethyl hydroxybenzoate was able to collect the metal Li. Then, the ethyl hydroxybenzoate being after the Li collection was dissolved in the ethyl methyl carbonate. Therefore, it was found that the ethyl hydroxybenzoate was changed by the collection of the metal Li to be a chemical compound being soluble in the nonaqueous solvent.

### B. Second test

In the present test, an effect of the Li collecting member in an actual lithium ion secondary battery was examined. Below, the lithium ion secondary battery (a test example) having been prepared in the present test will be described.

### 1. Each test example

### (1) Test example 1

In Test example 1, the lithium ion secondary battery was manufactured without adding the Li collecting member to the negative electrode active material layer. In particular, at first, the positive electrode active material (LiNi_{1/3}Co_{1/3}Mn_{1/3}O₂), the electrically conducting material (acetylene black), and the binder (PVdF) were mixed in a rate of 90 : 8 : 2 to disperse them in a dispersion medium (NMP: N-methylpyrrolidone), so that a paste for the positive electrode composite material was prepared. Next, this paste for the positive electrode composite material was applied to coat both surfaces of the positive electrode collecting body (an aluminum foil), and then the resultant was dried and extended by rolling, so that the positive electrode formed in a sheet shape was manufactured. Incidentally, a size of the positive electrode was set to be 47 mm x 45 mm. Then, the positive electrode terminal made of aluminum was connected to this positive electrode.

Next, in the present test example, the negative electrode active material (graphite) and the binder (SBR) were mixed in a rate of 98 : 2 to disperse them in the dispersion medium (NMP), so that a paste for the negative electrode composite material was prepared. Then, this paste was applied to coat both surfaces of the negative electrode substrate (a copper foil), and then the resultant was dried and extended by rolling, so that the negative electrode formed in a sheet shape was manufactured. Incidentally, a size of the negative electrode was set to be 49 mm x 47 mm. Then, the negative electrode terminal made of copper was connected to this negative electrode.

Next, a laminate body was manufactured in which the microporous separator made from polypropylene was arranged between the positive electrode and the negative electrode. Then, this laminate body was accommodated in a separator formed in a bag shape, and then the resultant was accommodated at an inside of a laminate outer case. Then, the nonaqueous electrolytic solution was injected to the inside of the outer case, then the laminate outer case was sealed, and thus the lithium ion secondary battery for an evaluation test (Test example 1) was constructed. Incidentally, in the present test, the nonaqueous electrolytic solution was used in which LiPF₆ being as the supporting salt was contained at about 1.16 M concentration in the mixed solvent containing EC, EMC, and DMC in a volume ratio of 3 : 3 : 4.

### (2) Test examples 2 to 7

In Test examples 2 to 7, the lithium ion secondary batteries for the evaluation tests were constructed under the same condition as Test example 1, except for adding the Li collecting member (ethyl hydroxybenzoate) to the negative electrode active material layer. Incidentally, in Test examples 2 to 7, a slurry was prepared in which EMC and ethyl hydroxybenzoate were mixed, and then the slurry was applied by a drop cast method to coat the surface of the negative electrode active material layer. Then, by performing a drying process at 40°C for 120 minutes, the Li collecting member was adhered on the surface of the negative electrode active material layer. Additionally, in the present tests, the addition amounts of the Li collecting members (mg/cm²) with respect to areas of the surfaces of the negative electrode active material layers were differentiated among Test examples 2 to 7. Particular addition amounts of the Li collecting members are shown in Table 1.

### 2. Evaluation test

Next, in the present test examples, the electric charge and discharge tests for the lithium ion secondary batteries of Test examples 1 to 7 were performed and then the precipitation amounts of the metal Li were measured. In particular, on the lithium ion secondary battery of each test example, 100 cycles of electric charge and discharge cycles were performed, while in each electric charge and discharge cycle a CC charge was performed under -10°C environment with 3 C constant current to charge from 3 V to 4.2 V and then a CC discharge was performed with 4.2 C constant current discharge (CC discharge) to discharge from 4.2 V to 3 V. Next, the battery being after the electric charge and discharge cycles was disassembled, and then a size (mm²) of an area (the Li precipitation area) where the metal Li precipitated on the surface of the negative electrode active material layer was measured. A measurement result was shown in Table 1.

### [Table 1]

**Table 1**

| Test example | Addition amount of Li collecting member (mg/cm²) | Size of Li precipitation area (mm²) |
|---|---|---|
| 1 | 0 | 400 |
| 2 | 0.011 | 342 |
| 3 | 0.028 | 187 |
| 4 | 0.056 | 124 |
| 5 | 0.11 | 119 |
| 6 | 0.16 | 115 |
| 7 | 0.22 | 114 |

As shown in Table 1, regarding Test examples 2 to 7, it was confirmed that the sizes of the Li precipitation areas became smaller in comparison with Test example 1. Thus, it was found that the precipitation of the metal Li could be suppressed when the Li collecting member was added to the negative electrode active material layer. Further, in Test examples 3 to 7 among Test examples 2 to 7, the Li precipitation amount was significantly reduced. Thus, it was found that the suitable addition amount of the Li collecting member was equal to or more than 0.2 mg/cm².

Above, specific examples of the herein disclosed technique have been explained in detail, but these are merely illustrations, and thus these are not to restrict the scope of claims. The technique recited in claims contains matters in which the above-illustrated specific example is variously deformed or changed.

Incidentally, the herein disclosed technique contains Items 1 to 8 described below. Items 1 to 8 described below are not restricted to the above described embodiment.

### <Item 1>

A negative electrode for a lithium ion secondary battery, comprising:
a negative electrode substrate; and
a negative electrode active material layer attached on a surface of the negative electrode substrate, wherein
the negative electrode active material layer contains a chemical compound represented by a formula (1) described below. 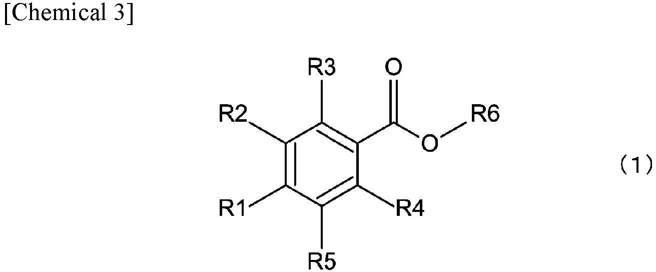 (Each of R1 to R5 in the formula is independently selected from a group consisting of a hydrogen, an alkyl group, a hydroxy group, a cyano group, an aldehyde group, an ether group, an ester group, an amino group, and a phenyl group, R6 is the alkyl group, and at least 1 of the R1 to the R5 is the hydroxy group).

### <Item 2>

The negative electrode recited in Item 1, wherein
the R6 is the alkyl group whose carbon number is 1 to 5.

### <Item 3>

The negative electrode recited in Item 1 or 2, wherein
the R1 is the hydroxy group.

### <Item 4>

The negative electrode recited in any one of Items 1 to 3, wherein
the chemical compound represented by the formula (1) is ethyl hydroxybenzoate.

### <Item 5>

The negative electrode recited in any one of Items 1 to 4, wherein
the chemical compound represented by the formula (1) is attached on a surface of the negative electrode active material layer.

### <Item 6>

The negative electrode recited in any one of Items 1 to 5, wherein
an addition amount of the chemical compound represented by the formula (1) per unit area size of a surface of the negative electrode active material layer is equal to or more than 0.02 mg/cm² and not more than 0.25 mg/cm².

### <Item 7>

A lithium ion secondary battery, comprising:
an electrode assembly that comprises a positive electrode and a negative electrode; and
a nonaqueous electrolytic solution that osmoses to an inside of the electrode assembly, wherein
the negative electrode is the negative electrode according to any one of recited in any one of Items 1 to 6.

### <Item 8>

The lithium ion secondary battery recited in Item 7, wherein
the nonaqueous electrolytic solution contains a nonaqueous solvent that belongs to carbonates.

## Claims

1. A negative electrode (10) for a lithium ion secondary battery, comprising:
a negative electrode substrate (12); and
a negative electrode active material layer (14) attached on a surface of the negative electrode substrate (12), wherein
the negative electrode active material layer (14) contains a chemical compound represented by a formula (1) described below. 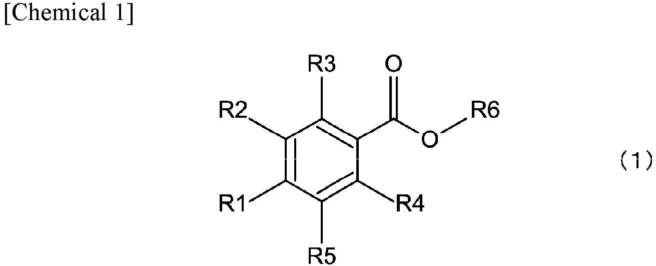 (Each of R1 to R5 in the formula is independently selected from a group consisting of a hydrogen, an alkyl group, a hydroxy group, a cyano group, an aldehyde group, an ether group, an ester group, an amino group, and a phenyl group, R6 is the alkyl group, and at least 1 of the R1 to the R5 is the hydroxy group).

2. The negative electrode (10) according to claim 1, wherein
the R6 is the alkyl group whose carbon number is 1 to 5.

3. The negative electrode (10) according to claim 1 or 2, wherein
the R1 is the hydroxy group.

4. The negative electrode (10) according to any one of claims 1 to 3, wherein
the chemical compound represented by the formula (1) is ethyl hydroxybenzoate.

5. The negative electrode (10) according to any one of claims 1 to 4, wherein
the chemical compound represented by the formula (1) is attached on a surface of the negative electrode active material layer (14).

6. The negative electrode (10) according to any one of claims 1 to 5, wherein
an addition amount of the chemical compound represented by the formula (1) per unit area size of a surface of the negative electrode active material layer (14) is equal to or more than 0.02 mg/cm² and not more than 0.25 mg/cm².

7. A lithium ion secondary battery (1), comprising:
an electrode assembly (20) that comprises a positive electrode (50) and a negative electrode (10); and
a nonaqueous electrolytic solution (30) that osmoses to an inside of the electrode assembly (20), wherein
the negative electrode (10) is the negative electrode (10) according to any one of according to any one of claims 1 to 6.

8. The lithium ion secondary battery (1) according to claim 7, wherein
the nonaqueous electrolytic solution (30) contains a nonaqueous solvent that belongs to carbonates.
